# EUROPÄISCHE PATENTANMELDUNG

(11) **EP 1 508 996 A2**
(43) Veröffentlichungstag der Anmeldung: **23.02.2005**
(21) Anmeldenummer: 04017359.3
(22) Anmeldetag: 22.07.2004
(51) Int. Cl.: H04L 12/24

(54) **Datenübertragung in einem Kommunikationsnetzwerk für ein Automatisierungssystem**

(30) Priorität: 21.08.2003 DE 10338495
(71) Anmelder: SIEMENS AKTIENGESELLSCHAFT, 80333 München (DE)
(72) Erfinder: Becker, Peter, 76571 Gaggenau (DE)

(57) **Zusammenfassung**

Die vorliegende Erfindung betrifft ein Verfahren zum Melden von Qualitätsmerkmalen einer Datenübertragungsverbindung zwischen einem Sender und einem Empfänger in einem Datenübertragungsnetzwerk für ein Automatisierungssystem, insbesondere der Meldung von Qualitätsmerkmalen, auf der Transportschicht eines, die Kommunikation des Datenübertragungsnetzwerkes abbildenden standardisierten Schichtenmodells. Das erfindungsgemäße Verfahren umfasst die Schritte:
- Ermitteln einer Zeitdifferenz zwischen einem, vom Sender gesendeten Auftragssignals und einem, vom Empfänger an den Sender gesendeten und vom Sender empfangenen Quittungssignal, wobei das Quittungssignal den Empfang des Auftragsignals vom Empfänger quittiert,
- Sammeln dieser ermittelten Zeitdifferenz zusammen mit weiteren ermittelten Zeitdifferenzen für weitere gesendete Auftragsignale,
- Weiterreichen dieser gesammelten Zeitdifferenzen, um einem Anwender des Automatisierungssystems die Qualitätsmerkmale der Datenübertragungsverbindung zu melden.

## Beschreibung

Die vorliegende Erfindung betrifft die Datenübertragung in einem Kommunikationsnetzwerk für ein Automatisierungssystem. Insbesondere betrifft die vorliegende Erfindung ein Verfahren zum Melden von Qualitätsmerkmalen einer Datenübertragungsverbindung zwischen einem Sender und einem Empfänger im Kommunikationsnetzwerk gemäß dem Oberbegriff des Anspruchs 1.

Automatisierungssysteme sind heute weitverbreitet, um damit Prozessabläufe zu automatisieren. Dabei werden verschiedene Einheiten des Automatisierungssystems, wie Prozessmodule, Programmiergeräte, oder auch benötigte Engineeringssysteme in geeigneter Weise miteinander verbunden. Zunehmend werden solche Automatisierungssysteme dezentralisiert. Hier sind dann mehrere Einheiten lokal zusammengefasst, die, beispielsweise über einen Rückwandbus, miteinander kommunizieren. Zusätzliche, weiter entfernte Einheiten kommunizieren mit diesen lokalen Einheiten beispielsweise über das Internet oder ein Ethernet.

Kommunikationsnetzwerke sind so aufgebaut, dass Kommunikationspartner über verschiedene Kommunikationswege so miteinander verbunden sind, dass Signale und Daten zwischen diesen Kommunikationspartnern übertragen werden können. Dabei werden die einzelnen Kommunikationswege aus drahtgebundenen oder drahtlose Verbindungen oder auch Kombinationen davon bestehen.

Zur Darstellung der, für die Kommunikation im Kommunikationsnetzwerk notwendigen Prozesse und Protokolle wird oft das als "OSI-Modell" [Bertsekas, Dimitri P.: Data Networks, 2^{nd} ed., Prentice Hall, 1992] bekannte und standardisierte Schichtenmodell herangezogen. Dieses Schichtenmodell teilt die Netzwerkkommunikation in sieben Schichten ein. Die obersten Schichten sind die so genannte Anwendungsschicht (Layer 7), die Darstellungsschicht (Layer 6) und die Sitzungsschicht (Layer 5). Mit diesen Schichten lassen sich die eigentlichen Anwenderfunktionen auf der Ebene der Kommunikationspartner abhandeln. Darunter folgen die Protokollschichten, die als Transportschicht (Layer 4) und Netzwerkschicht (Layer 3) bezeichnet werden. Anhand dieser Schichten lassen sich hauptsächlich die Netzwerkprotokolle, die für eine sichere Datenübertragung über die einzelnen Verbindungen notwendig sind, abhandeln. Als unterste Schichten folgen die physikalischen Schichten, das sind die Sicherungsschicht (Layer 2) und die Bitübertragungsschicht (Layer 1). In diesen Schichten wird die eigentliche physikalische Übertragung von Signalen und Daten auf den Verbindungen, die aus drahtgebundenen oder drahtlosen Übertragungsmedien bestehen können, abgehandelt.

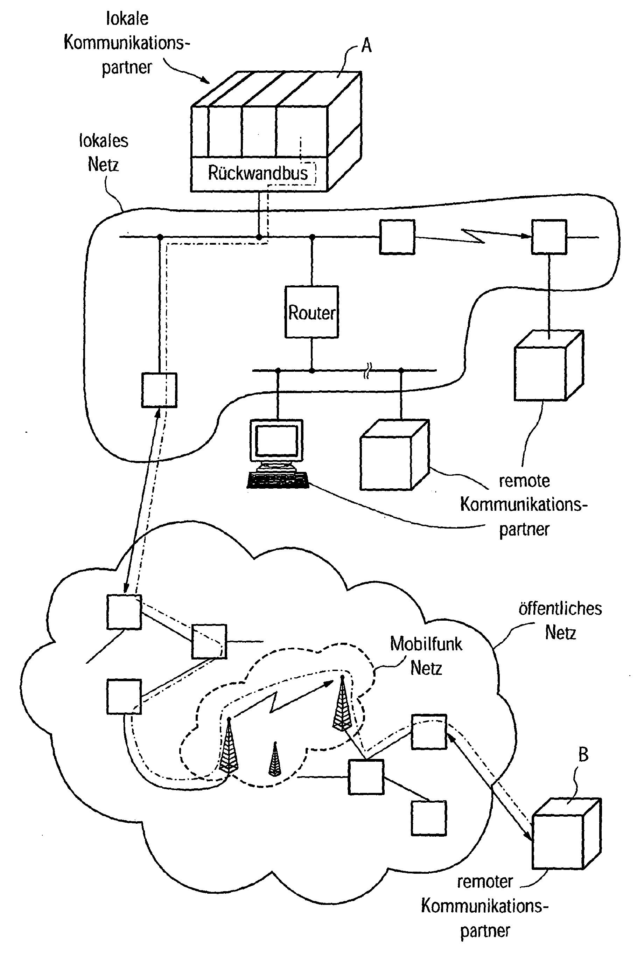

Die in der Figur gezeigten Einheiten eines dezentralisierten Automatisierungssystems können über die verschiedensten Kommunikationswege eines Kommunikationsnetzwerkes verbunden sein und miteinander kommunizieren, wobei die einzelnen Kommunikationswege wiederum aus unterschiedlichen Datenübertragungsverbindungen bestehen. Im vorliegenden Beispiel sind mehrere Einheiten als lokale Kommunikationspartner über einen Rückwandbus als Datenübertragungsverbindung verbunden. Entfernte Einheiten, als so genannte remote Kommunikationspartner bezeichnet, sind über ein lokales oder auch ein öffentliches Netz mit den lokalen Kommunikationspartnern verbunden. Dabei können sowohl das lokale Netz, wie beispielsweise ein Ethernet als auch das öffentliche Netz, wie beispielsweise das Internet, drahtgebundene als auch drahtlose Datenübertragungsverbindungen oder Kombinationen davon aufweisen. Zum sicheren Betrieb des Automatisierungssystems muss der zeitliche Ablauf der Kommunikation zwischen den einzelnen lokalen und remoten Kommunikationspartnern, das heißt zum Beispiel die Kommunikation zwischen der Einheit A und der Einheit B des Automatisierungssystems, gewährleistet sein. Dafür muss die Übertragung von Daten oder auch Signalen, die über die möglichen Kommunikationswege und damit über die verschiedensten Datenübertragungsverbindungen erfolgt, überwacht werden. Mit Bezug auf das standardisierte OSI-Modell kann diese Kommunikationsüberwachung im Automatisierungssystem in einfachster Weise auf der Ebene der oberen Anwendungsschichten realisiert werden. Das bedeutet, dass eine Anwendung im Automatisierungssystem so ausgelegt ist, dass sie die Kommunikation zwischen Einheit A und Einheit B überwacht, das heißt überprüft, ob die von einer Einheit A gesendeten Daten und Signalen auch innerhalb einer gewissen Zeit von der Einheit B empfangen wurden.

Die einzelnen Datenübertragungsverbindungen eines Kommunikationsweges weisen in der Regel unterschiedlichste Übertragungseigenschaften auf, die zudem noch durch äußere Einflüsse beeinflusst werden. Damit wird auch die für die Datenübertragung benötigte Übertragungszeit für die Datenübertragungsverbindung zeitlich variieren. Sind jetzt, wie in der Figur gezeigt, die Einheiten A und B über einen Kommunikationsweg, der aus verschiedenen Datenübertragungsverbindungen besteht, miteinander verbunden, so müssen bei der Überwachung die Übertragungszeiten aller möglichen Datenübertragungsverbindungen berücksichtigt werden. Das bedeutet dann aber auch, dass bei der Überwachung auf der Ebene der Anwendungsschicht, das heißt auf der Ebene der Kommunikationspartner, die Überwachungszeit so groß gewählt werden muss, dass jede dieser Übertragungseigenschaften berücksichtigt sind. Tritt bei einem der Datenübertragungsverbindungen eine Unterbrechung auf, so kann diese mit Ablauf der Überwachungszeit auf der Anwendungsschicht detektiert und beispielsweise in einem Anwenderprogramm angezeigt werden. Kommt es bei einer der Datenübertragungsverbindungen nur zu geringen zeitlichen Verzögerungen, so werden diese dem Anwender aufgrund der großen Überwachungszeiten auf der Ebene der Anwenderschicht nicht auffallen, solange diese Verzögerungen nicht zum Ablauf der Überwachungszeit führt. Zwar sind auf der Ebene der Protokollschichten, das heißt auf der Ebene der einzelnen Sender und Empfänger einer Datenübertragungsverbindung, Netzwerkprotokolle definiert, um weitgehend zeitunabhängig eine sichere Übertragung der Daten über diese Datenübertragungsverbindungen zu gewährleisten. Diese Netzwerkprotokolle stehen dem Anwender aber nicht zur Verfügung.

Aufgabe der vorliegenden Erfindung ist deshalb, ein Verfahren anzugeben, mit dem ein Anwender eines Automatisierungssystems detaillierte Informationen zum zeitlichen Verhalten und/oder zu auftretenden Übertragungsproblemen einer Datenübertragungsverbindung in einem Datenübertragungsnetzwerk für Automatisierungssysteme erhält.

Diese Aufgabe wird gelöst durch das Verfahren mit den Merkmalen des Anspruchs 1.

Dadurch, dass im Datenübertragungsnetzwerk, mit Bezug auf das standardisierte OSI-Modell, auf der Ebene der Transportschicht, das heißt auf der Ebene der Sender und Empfänger einer Datenübertragungsverbindung eine Zeitdifferenz zwischen einem vom Sender gesendeten Auftragssignal und einem vom Empfänger an den Sender gesendeten und vom Sender empfangenen Quittungssignal ermittelt wird, diese ermittelte Zeitdifferenz zusammen mit anderen Zeitdifferenzen gesammelt und die gesammelten Zeitdifferenzen zum Melden weitergereicht werden, erhält der Anwender des Automatisierungssystems die Möglichkeit, diese gesammelten Zeitdifferenzen abzufragen und auszuwerten. Insbesondere stehen dem Anwender im Fehlerfall, das heißt bei Auftreten eines auf der Ebene der Anwendungsschicht detektierten Übertragungsfehlers, beispielsweise, weil die im Anwenderprogramm festgelegte zulässige Übertragungszeit abgelaufen ist, oder weil eine vom Automatisierungssystem vorgegebene Zeitspanne abgelaufen ist, detailliertere Informationen zu den aufgetretenen Übertragungsproblemen zur Verfügung. Verhält sich die Kommunikation zwischen den Kommunikationspartnern nicht so wie erwartet, kann der Anwender sehr rasch die Qualität der einzelnen Verbindungen bewerten. Besonders dann, wenn in einem dezentralisierten Automatisierungssystem Einheiten als remote Kommunikationspartner mit lokalen Kommunikationspartner über Netze, wie zum Beispiel das Internet, kommunizieren, auf die der Anwender keinen Einfluss hat, kann er zumindest an der Schnittstelle zu diesen Netzen entsprechende Informationen über diese Verbindung erhalten.

Werden schon beim Verbindungsaufbau der Datenübertragungsverbindung die Zeitdifferenzen zwischen einer Anforderung und einer positiven Quittierung ermittelt und zum Melden weitergereicht, so stehen dem Anwender mit den gesammelten Zeitdifferenzen detaillierte Informationen über die Dauer, bis ein Verbindungsaufbau stattfindet, zur Verfügung und können vom Anwender statistisch ausgewertet und anschließend qualitativ bewertet werden. Entsprechend kann damit auch die Zahl der Verbindungsaufbauversuche gezählt werden. Eine hohe Zahl wird darauf hindeuten, dass es beispielsweise Probleme durch Abschattung bei einer drahtlosen Verbindung gibt.

Werden bei der Datenübertragung über die Datenübertragungsverbindung die Zeitdifferenzen zwischen Beginn der Datenübertragung und einer positiven Quittierung ermittelt, gesammelt und zum Melden weitergereicht, so stehen dem Anwender mit den gesammelten Zeitdifferenzen detaillierte Informationen über die Qualität der Datenübertragung, insbesondere über die Dauer, bis eine gewisse Datenmenge übertragen ist, zur Verfügung. Der Anwender kann dann anhand der, auf der Ebene der Transportschicht ermittelten Zeitdifferenzen feststellen, ob es bei einzelnen Datenübertragungsverbindungen zu Übertragungsengpässen, beispielsweise infolge einer Überlastung einer Datenübertragungsverbindung, kommt. Dadurch, dass die Zeitdifferenzen vorzugsweise für einzelne Datenübertragungen, insbesondere bei der Übertragung in Form von Datenpaketen, ermittelt und diese zusammen mit den anderen ermittelten Zeitdifferenzen für weitere Datenübertragungen gesammelt und zum Melden weitergereicht werden, hat der Anwender die Möglichkeit, diese detaillierten Informationen zusätzlich zu der eigentlichen Überwachungszeit abzufragen. Dadurch kann die Stabilität der Datenübertragungsverbindung und damit die des Kommunikationsweges durch den Anwender sehr einfach und objektiv überwacht werden.

Vorzugsweise werden anhand der ermittelten Zeitdifferenzen Minimalwerte und/oder Maximalwerte und/oder Mittelwerte berechnet und/oder die Anzahl der Verbindungsabbrüche ermittelt und diese Informationen als Qualitätsmerkmale der Datenübertragungsverbindung zum Melden weitergereicht.

Vorzugsweise werden die ermittelten, gesammelten und weitergereichten Daten dem Anwender in einem Anwenderprogramm und/oder auf einem Programmiergerät und/oder einem Diagnosegerät und/oder einem Anzeigegerät zur Verfügung gestellt, das heißt gemeldet. Damit stehen dem Anwender auf einfache Art und Weise, das heißt ohne zusätzliche Anzeigemittel, detaillierte Informationen über die Qualität der Datenübertragungsverbindung zur Verfügung. So können die gemäß der vorliegenden Erfindung ermittelten, gesammelten und zum Melden weitergereichten detaillierten Informationen während des Betriebes des Automatisierungssystems direkt an das Anwenderprogramm weitergereicht und dem Anwender im Anwenderprogramm gemeldet werden. Vom Anwenderprogramm können dann auch entsprechende Meldungen an vorkonfigurierte Ziele, wie beispielsweise eine zentrale Überwachungsstelle oder eine Service Hotline, weitergeleitet werden. Zusätzlich können im Servicefall, die detaillierten Informationen auch direkt als Systemzustanddaten an ein Diagnosegerät weitergereicht und dem Anwender, das heißt hier dem Servicepersonal, auf dem Diagnosegerät gemeldet und damit zur Verfügung gestellt werden. Das Weiterreichen kann auch erst zu einem Zeitpunkt erfolgen, nachdem ein Diagnosegerät an das Automatisierungssystem angeschlossen wurde.

Die Erfindung wird nun im Weiteren anhand des in der Figur beispielhaft gezeigten Automatisierungssystems näher beschrieben.

In dem in der Figur gezeigten Automatisierungssystem sind Einheiten, wie beispielsweise Steuerungseinheiten, Funktionsmodule oder auch Bedien und Beobachten Module zusammengefasst. Über einem Rückwandbus sind diese Einheiten des Automatisierungssystems miteinander verbunden und kommunizieren als so genannte lokale Kommunikationspartner miteinander. Weitere Einheiten, wie das hier gezeigte Programmiergerät, aber auch ein Engineeringsystem oder weitere Steuerungseinheiten und Funktionsmodule, kommunizieren als so genannte remote Kommunikationspartner mit den lokalen Einheiten über ein lokales Netz, wie beispielsweise ein LAN-, WLAN-Netz oder auch das Ethernet. Ein Diagnosegerät, aber auch weitere bereits oben genannte Einheiten des Automatisierungssystems, sind als weitere remoter Kommunikationspartner über das Ethernet und über ein globales öffentliches Netz, wie zum Beispiel das Internet, mit den lokalen Kommunikationspartnern verbunden. Die Übertragung sowohl im Ethernet als auch im Internet kann sowohl drahtgebunden als auch drahtlos erfolgen. Im Gegensatz zu den lokalen Kommunikationspartnern, die im Allgemeinen über einen einzigen gemeinsamen Kommunikationsweg, wie den hier gezeigten Rückwandbus, verbunden sind, können remote Kommunikationspartner über verschiedene Kommunikationswege, die jeweils noch verschiedene Datenübertragungsverbindungen aufweisen, miteinander verbunden sein. So ist die in der Figur gezeigte Einheit A über den Rückwandbus, eine drahtgebundene Datenübertragungsverbindung des lokalen Netzes und über mehrere mittels Knoten verbundene drahtgebundene Datenübertragungsverbindungen und eine drahtlose Datenübertragungsverbindung des öffentlichen Netzes mit der Einheit B verbunden.

Der Rückwandbus, sowie die Datenübertragungsverbindungen des lokalen und des öffentlichen Netzes bilden zusammen mit weiteren nicht gezeigten Kommunikationswegen das Datenübertragungsnetzwerk für das Automatisierungssystem. Zur sicheren Übertragung der Signale und Daten innerhalb des Datenübertragungsnetzwerkes werden die Kommunikationspartner nach dem eingangs erwähnten und als OSI-Modell oder auch als Sieben-Schichten-Modell bekannte Schichtenmodell eingerichtet. Damit wird aus der Sicht des Anwenders gewährleistet, dass die von ihm beabsichtigte Anwendung vom Automatisierungssystem richtig durchgeführt wird. Treten Kommunikationsprobleme innerhalb des Kommunikationsnetzwerkes auf, müssen diese dem Anwender angezeigt werden, damit dieser darauf entsprechend reagieren kann.

Gemäß der vorliegenden Erfindung wird nun vorgeschlagen, dass Zeitdifferenzen auf der Ebene, der durch das OSI-Modell definierten Transportschicht, das heißt auf der Ebene der einzelnen Datenübertragungsverbindungen ermittelt werden. Diese ermittelten Werte werden, beispielsweise von einer zentralen Einheit wie der Steuerungseinheit, gesammelt und zum Melden weitergereicht. Mit diesen ermittelten Zeitdifferenzen, die ja Qualitätsmerkmale der Datenübertragungsverbindung darstellen, hat der Anwender die Möglichkeit, neben den allgemeinen Informationen über die Qualität des Kommunikationsweges zusätzliche detaillierte Informationen zu der Qualität der einzelnen Datenübertragungsverbindungen zu erhalten. Diese zum Melden weitergereichte detaillierten Informationen können dem Anwender dann als Auskunftsfunktion über das Programmiergerät oder in einem Anwenderprogramm gemeldet und damit zur Verfügung gestellt werden. Diese detaillierten Informationen können vorzugsweise als Systemzustandsdaten im Automatisierungssystem weitergereicht werden, so dass sie, wie andere Diagnosedaten auch, ausgelesen werden können. Werden die Systemzustandsdaten beispielsweise in einem Datenfeld und/oder als Abruf für einen Systemauftrag bereitgestellt, so kann der Anwender diese detaillierten Informationen im Bedarfsfall sehr schnell abfragen.

Die auf der Ebene der Transportschicht ermittelte Zeitdifferenz ist gemäß der vorliegenden Erfindung die Zeitspanne, die zwischen dem, von einem der Sender über eine Datenübertragungsvorrichtung gesendeten Auftragssignal und dem vom Sender erhaltenen Quittungssignal liegt. Das Quittungssignal ist dabei die Bestätigung des Empfängers, dass er das Auftragssignal empfangen hat. Im Wesentlichen werden bei der vorliegenden Erfindung zwei Arten von Auftragsignalen unterschieden. Zum einen wird während des Verbindungsaufbaues, das heißt dem Verbindungsaufbau über eine der Datenübertragungsverbindungen, das Auftragssignal die Anforderung zum Verbindungsaufbau sein. Diese Anforderung wird dabei ein Format aufweisen, das durch den für diese Datenübertragungsverbindung zugelassenem Standard vorgegeben ist, auf den hier aber nicht näher eingegangen werden soll. Zum anderen wird während der eigentlichen Verbindung das Auftragssignal das Signal sein, das die Daten während der Datenübertragung zwischen Sender und Empfänger überträgt und auch ein entsprechend standardisiertes Format aufweisen. Dabei können auch größere Datenmengen in mehrere Datenübertragungen, das heißt mehrere Aufträge segmentiert und beispielsweise in Form von Datenpaketen übertragen werden. Das vom Empfänger an den Sender des Auftragssignals zurückgesendete Quittungssignal wird vorzugsweise auch ein für die jeweilige Datenübertragungsverbindung standardisiertes Format haben. Inhaltlich kann ein Quittungssignal eine positive Quittierung, das heißt, dass das Auftragssignal vom Empfänger empfangen wurde, enthalten. Im Falle des Verbindungsaufbaues könnte das Quittungssignal aber auch eine negative Quittierung enthalten, nämlich dann, wenn keine Verbindung zustande kommt.

Anhand der so ermittelten Zeitdifferenzen, die zusammen mit weiteren Zeitdifferenzen für weitere über einen Kommunikationsweg gesendeten Auftragssignale gesammelt und zum Melden weitergeleitet werden, können dann statistische Werte ermittelt werden, die dem Anwender eine qualitative Bewertung der Datenübertragungsverbindung und damit des Kommunikationsweges ermöglichen.

Werden alle ermittelten Zeitdifferenzen gesammelt, das heißt sowohl die während des Verbindungsaufbaues ermittelten Werte als auch die während der Datenübertragung ermittelten Werte, und entsprechend weitergereicht, so erhält der Anwender eine vollständige Übersicht über die Qualität der einzelnen Datenübertragungsverbindungen eines Kommunikationsweges. Vorzugsweise werden die so gesammelten detaillierten Informationen in drei Gruppen eingeteilt. Dabei enthält eine Gruppe alle ermittelten Werte, aus denen der zeitliche Verlauf während der Datenübertragung bewertet werden kann. Eine weitere Gruppe enthält alle Werte, aus denen der zeitliche Verlauf während des Verbindungsaufbaues bewertet werden kann. Und eine weitere Gruppe enthält alle Werte, anhand derer eine Unterbrechung des Kommunikationsweges, zum Beispiel ein erfolgloser Verbindungsaufbau oder auch ein Verbindungsabbruch, initiiert durch den Sender oder Empfänger, bewertet werden kann. Solche Unterbrechungen werden gemäß der vorliegenden Erfindung vorzugsweise dadurch ermittelt, dass erkannt wird, dass die Zeitdifferenz auf der Ebene der Transportschicht eine bestimmte Zeitdauer überschritten hat und daraufhin eine entsprechende Zahl um eins erhöht wird. So wird beispielsweise die Zahl für Verbindungsabbrüche um eins erhöht, wenn die Zeitdifferenz zwischen Beginn der Datenübertragung und positiver Quittierung eine bestimmte im Anwenderprogramm festgelegte Zeitdauer überschreitet. Zudem wird die Zahl für Verbindungsabbrüche um eins erhöht, wenn eine vom Automatisierungssystem vorgegebene Zeitspanne überschritten ist. Oder es wird die Zahl für Verbindungsaufbauversuche um eins erhöht, wenn die Zeitdifferenz zwischen der Anforderung eines Verbindungsaufbaues und der positiven Quittierung eine bestimmte Zeitdauer überschreitet. Beim Verbindungsaufbau kann aber die Zahl auch dann um eins erhöht werden, wenn eine negative Quittung vom Empfänger an den Sender geschickt wird.

Mit der vorliegenden Erfindung erhält der Anwender somit eine Vielzahl von statischen Qualitätsmerkmalen über die einzelnen Datenübertragungsverbindungen der Kommunikationswege zwischen zwei Kommunikationspartnern eines Automatisierungssystems. Insbesondere kann er dann, wenn sich die Kommunikation zwischen den Kommunikationspartnern auf der Ebenen der Anwendungsschicht nicht so wie erwartet verhält, sehr rasch über die ermittelten und gemeldeten Werte die Qualität der einzelnen Datenübertragungsverbindungen bewerten. Dies ist besonders dann von Vorteil, wenn in einem dezentralisierten Datenübertragungsnetzwerk Einheiten des Automatisierungssystems über globale Netze, das heißt öffentliche Netze, wie das Internet, kommunizieren, auf die der Annwender keinen Einfluss hat. Dadurch, dass zumindest an den Sendern und Empfängern, welche die Schnittstelle zwischen lokalen und remoten Kommunikationspartnern mit dem Netz bilden, Zeitdifferenzen ermittelt, gesammelt und zum Melden weitergereicht werden, hat der Anwender die Möglichkeit, detaillierte Informationen zur Verbindung über dieses Netz zu erhalten und gegebenenfalls darauf zu reagieren. Zudem erhält der Anwender durch die Meldung der auf der Ebene der Transportschicht ermittelten Qualitätsmerkmale die Möglichkeit, die Zeitüberwachung auf der Ebene der Anwenderschicht zu optimieren. Das heißt bei der Inbetriebnahme, beim Betrieb des Automatisierungssystems aber auch im Diagnosefall kann die Stabilität der einzelnen Datenübertragungsverbindungen der Kommunikationsverbindung zwischen den Kommunikationspartnern durch den Anwender über das Anwenderprogramm sehr einfach und objektiv überwacht werden.

Zudem kann der Anwender im Anwenderprogramm mit eigenen Algorithmen eine von ihm festgelegte Überwachungszeit, mit der die Kommunikationsfähigkeit des Empfängers überwacht wird, einstellen. Kommt es bei den Erweiterungen des Kommunikationsnetzwerkes zu höheren Netzbelastungen durch zusätzlich hinzukommende langsame Datenübertragungsverbindungen, so kann der Anwender diese Überwachungszeit im Anwenderprogramm entsprechend nachjustieren.

Das zuvor beschriebene erfindungsgemäße Verfahren kann mit zusätzlichen Ermittlungen, Maßnahmen auf der Ebenen der Transportschicht kombiniert werden, um dem Anwender noch detailliertere Informationen über die Datenübertragungsverbindung zu melden. So ist es auch denkbar, zusätzlich zu der auf der Ebene der Transportschicht gemessenen Zeitdifferenz zwischen Auftragsignal und Quittungssignal während der Datenübertragung auch eine Datenrate anhand der übertragenen Datenmenge und der dazu benötigten Zeit zu ermitteln, wobei die Daten vom Sender zum Empfänger vorzugsweise in Datenpaketen übertragen werden. Diese ermittelte Datenrate wird mit einer voraus definierten Sollrate verglichen und, wenn die ermittelte Datenrate nicht der Sollrate entspricht wird ein Übertragungsfehler festgestellt. Dieser festgestellte Übertragungsfehler wird dann zum Melden weitergereicht. Damit erhält der Anwender zusätzliche detaillierte Informationen über die Quantität der Datenübertragung der einzelnen Datenübertragungsverbindungen.

## Patentansprüche

1. Verfahren zum Melden von Qualitätsmerkmalen einer Datenübertragungsverbindung zwischen einem Sender und einem Empfänger in einem Datenübertragungsnetzwerk für ein Automatisierungssystem, insbesondere der Meldung von Qualitätsmerkmalen, auf der Transportschicht eines, die Kommunikation des Datenübertragungsnetzwerkes abbildenden standardisierten Schichtenmodells,
mit den Schritten
- Ermitteln einer Zeitdifferenz zwischen einem, vom Sender gesendeten Auftragssignals und einem, vom Empfänger an den Sender gesendeten und vom Sender empfangenen Quittungssignal, wobei das Quittungssignal den Empfang des Auftragssignals vom Empfänger quittiert,
- Sammeln dieser ermittelten Zeitdifferenz zusammen mit weiteren ermittelten Zeitdifferenzen für weitere gesendete Auftragssignale,
- Weiterreichen dieser gesammelten Zeitdifferenzen, um einem Anwender des Automatisierungssystems die Qualitätsmerkmale der Datenübertragungsverbindung zu melden.

2. Verfahren nach Anspruch 1,
**dadurch gekennzeichnet, dass**
das Auftragsignal eine durch das Datenübertragungsnetzwerk festgelegte Anforderung eines Verbindungsaufbaues zur Datenübertragung über die Datenübertragungsverbindung ist, und das Quittierungssignal eine durch das Datenübertragungsnetzwerk festgelegte positive Quittierung des Verbindungsaufbaues ist.

3. Verfahren nach Anspruch 2,
**dadurch gekennzeichnet, dass**
eine Zahl für Verbindungsaufbauversuche um eins erhöht wird, wenn die Zeitdifferenz zwischen der Anforderung eines Verbindungsaufbaues und der positiven Quittierung eine bestimmte Zeitdauer überschreitet.

4. Verfahren nach einem der Ansprüche 1 bis 3,
**dadurch gekennzeichnet, dass**
das Auftragssignal eine durch das Datenübertragungsnetzwerk festgelegte Datenübertragung ist, und das Quittierungssignal eine durch das Datenübertragungsnetzwerk festgelegte positive Quittierung der Datenübertragung ist.

5. Verfahren nach Anspruch 4,
**dadurch gekennzeichnet, dass**
die Datenübertragung in Datenpaketen erfolgt.

6. Verfahren nach einem der Ansprüche 4 oder 5,
**dadurch gekennzeichnet, dass**
aus den gesammelten Zeitdifferenzen Minimal- und Maximalwerte berechnet und weitergereicht werden.

7. Verfahren nach einem der Ansprüche 4 bis 6,
**dadurch gekennzeichnet, dass**
aus den gesammelten Zeitdifferenzen Mittelwerte berechnet und weitergereicht werden.

8. Verfahren nach Anspruch 4 oder 5,
**dadurch gekennzeichnet, dass**
eine Zahl für Verbindungsabbrüche um eins erhöht wird, wenn die Zeitdifferenz zwischen Beginn der Datenübertragung und positiver Quittierung eine bestimmte Zeitdauer überschreitet.

9. Verfahren nach einem der vorherigen Ansprüche 1 bis 8,
**dadurch gekennzeichnet, dass**
zum Melden der Qualitätsmerkmale die gesammelten Zeitdifferenzen und/oder die berechneten Mittelwerte und/oder die berechneten Minimal- und Maximalwerte für die Verbindungsaufbaue einer ersten Gruppe, die gesammelten Zeitdifferenzen und/oder die berechneten Mittelwerte und/oder die berechneten Minimal- und Maximalwerte für die Datenübertragung einer zweiten Gruppe und die Zahl für Verbindungsaufbauversuche und/oder für Verbindungsabbrüche einer dritten Gruppe zugeordnet werden.

10. Verfahren nach Anspruch 1 bis 9,
**dadurch gekennzeichnet, dass**
die Meldung Qualitätsmerkmale der Datenübertragungsverbindung in einem Anwenderprogramm und/oder auf einem Programmiergerät und/oder einem Diagnosegerät und/oder einem Anzeigegerät des Automatisierungssystems erfolgt.
